# FASCICULE DE BREVET EUROPEEN

(11) **EP 3 170 709 B1**
(45) Date de publication et mention de la délivrance du brevet: **03.04.2019**
(21) Numéro de dépôt: 16195364.1
(22) Date de dépôt: 24.10.2016
(51) Int. Cl.: B60S 1/40, B60S 1/38

(54) **ADAPTATEUR, CONNECTEUR ET ENSEMBLE FORME D'UN TEL CONNECTEUR ET D'UN TEL ADAPTATEUR POUR UN BALAI D'ESSUYAGE**
ADAPTER, ANSCHLUSSSTÜCK UND EINHEIT AUS EINEM SOLCHEN ANSCHLUSSSTÜCK UND EINEM SOLCHEN ADAPTER FÜR EINEN SCHEIBENWISCHER
ADAPTER, CONNECTOR AND ASSEMBLY MADE UP OF SUCH A CONNECTOR AND SUCH AN ADAPTER FOR A WIPER BLADE

(30) Priorité: 17.11.2015 FR 1561075
(43) Date de publication de la demande: 24.05.2017
(73) Titulaire: Valeo Systèmes d'Essuyage, 78322 Le Mesnil Saint Denis (FR)
(72) Inventeur: POTON, Eric, 63430 Pont du Château (FR); Houssat, Stéphane, 63112 BLANZAT (FR); GAUCHER, Vincent, 63720 ENNEZAT (FR)
(74) Mandataire: Vincent, Catherine Marie Marguerite

(56) Documents cités:
- WO-A1-2015/003740
- FR-A1- 2 847 221
- US-A- 4 794 664
- US-A1- 2014 053 361

## Description

La présente invention se rapporte aux systèmes d'essuyage pour véhicules automobiles, et concerne plus particulièrement un adaptateur ou un connecteur formant tous deux un ensemble pour la connexion mécanique d'un balai d'essuyage à un bras d'entraînement.

Les systèmes d'essuyage, couramment dénommés essuie-glaces, pour véhicules automobiles sont conçus pour retirer, par balayage, les liquides et salissures qui peuvent perturber la vision que le conducteur a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une lame métallique qui maintient la lame racleuse sur toute sa longueur, le balai d'essuyage est rattaché au bras d'entraînement par un dispositif d'assemblage qui comprend au moins un connecteur monté solidaire du balai d'essuyage.

Dans un premier mode de liaison connu, un adaptateur, apte à être assemblé avec le connecteur du balai d'essuyage, est monté sur une pièce terminale du bras d'entraînement. Le connecteur est monté mobile en rotation par rapport à l'adaptateur. Ce premier mode de liaison est couramment utilisé pour les essuie-glaces destinés aux surfaces vitrées situées à l'avant du véhicule automobile (pare-brise). Dans un deuxième mode de liaison connu, le connecteur est raccordé à un arbre solidaire du bras d'entraînement. Ce deuxième mode de liaison est couramment rencontré dans les essuie-glaces destinés aux surfaces vitrées situées à l'arrière du véhicule (lunette arrière).

L'état de la technique le plus proche est formé par le document EP2229301 B1 qui décrit un essuie-glace comprenant un connecteur qui est prévu pour porter un balai d'essuyage avant, c'est-à-dire prévu pour le pare-brise du véhicule. Le connecteur comprend une embase et un corps qui s'étend au-dessus de l'embase. L'embase comporte des moyens de solidarisation du connecteur au balai d'essuyage.

Une telle connexion ne peut pas se transférer aisément entre un balai d'essuyage avant et un balai d'essuyage arrière. En effet, le connecteur et l'adaptateur d'une connexion arrière sont significativement plus petits. Les reprises d'efforts transversaux entre le balai d'essuyage et le bras d'entraînement sont donc plus compliquées à mettre en oeuvre, tout en conservant une mobilité en rotation entre l'adaptateur et le connecteur. Cette problématique de reprise d'efforts transversaux existe également à l'égard d'un pare-brise de véhicule, et la solution de l'invention s'applique également à une connexion entre un balai d'essuyage avant et un bras d'entraînement avant. FR-A-2847221 montre un autre ensemble de l'état de la technique.

La présente invention a pour but d'améliorer cette situation en proposant un ensemble formé par un adaptateur et un connecteur capable de mettre en oeuvre une rotation entre le balai d'essuyage et le bras d'entraînement tout en garantissant une absence de jeu transversal entre ces composants. Une telle connexion sécurise une liaison mécanique entre le balai d'essuyage et le bras d'entraînement, la liaison mécanique autorisant toutefois une rotation du connecteur autour de l'arbre du bras d'entraînement. Une telle connexion doit également être fiable, pérenne et ergonomique.

Dans ce but, l'invention a pour objet un ensemble dans lequel l' adaptateur destiné à relier un balai d'essuyage à un bras d'entraînement d'un dispositif essuie-glace, comprend au moins un moyen de solidarisation au bras d'entraînement et deux dispositifs de rotation autorisant un pivotement entre le balai d'essuyage et le bras d'entraînement.

Selon la présente invention, l'adaptateur comprend au moins un moyen de blocage d'un mouvement le long de l'axe de rotation, ledit moyen de blocage étant ménagé entre les deux dispositifs de rotation, selon l'axe de rotation. Selon l'invention, au moins un des dispositifs de rotation est formé par un toron qui émerge d'une paroi longitudinale interne de l'adaptateur vers l'extérieur de celui-ci.

L'adaptateur présente avantageusement au moins l'une des caractéristiques suivantes, prise seule ou en combinaison :
- le moyen de blocage est formé par au moins une surface interne qui s'étend entre les deux dispositifs de rotation,
- le moyen de blocage est formé par deux surfaces internes délimitant transversalement un espace interne et disposées en vis-à-vis l'une face à l'autre,
- les deux surfaces internes sont formées sur un étrier que comprend l'adaptateur,
- Alternativement, au moins un des dispositifs de rotation est formé par un trou ménagé dans une paroi longitudinale interne de l'adaptateur,
- l'adaptateur présente une section en forme de « U », la ou les surface internes s'étendant dans la section en « U ». Dans un tel cas, l'adaptateur comprend un fond et des parois latérales formant conjointement le « U », la ou les surfaces internes étant distinctes d'une face de ces parois latérales,
- l'une ou l'autre des surfaces internes sont polies.

L'ensemble de l'invention comprend également un connecteur destiné à relier un balai d'essuyage à un bras d'entraînement d'un dispositif essuie-glace, comprenant au moins un moyen de fixation balai d'essuyage et deux paliers de rotation autorisant un pivotement entre le balai d'essuyage et le bras d'entraînement.

Selon l'invention, le connecteur comprend au moins un dispositif de blocage d'un mouvement selon l'axe de pivotement, ledit dispositif de blocage étant ménagé entre les deux paliers de rotation.

Le connecteur présente avantageusement au moins l'une des caractéristiques suivantes, prise seule ou en combinaison :
- le dispositif de blocage est formé par au moins une face externe qui s'étend entre les deux paliers de rotation,
- le dispositif de blocage est formé par deux faces externes qui délimitent une joue de guidage ménagée entre un premier flan latéral porteur d'un des paliers et un deuxième flan latéral porteur du second palier,
- la face externe est une face externe d'au moins un montant de guidage que comprend la joue de guidage,
- au moins un palier de rotation est formé par un évidement circulaire ménagé dans un flan latéral délimitant le connecteur,
- Alternativement, au moins un palier de rotation est formé par un toron qui émerge d'un flan latéral du connecteur en direction du dispositif de blocage.

Le dispositif de blocage du connecteur est logé dans le moyen de blocage de l'adaptateur.

La joue de guidage s'étend entre les deux surfaces internes délimitant transversalement un espace interne de l'adaptateur.

Avantageusement, au moins une face externe du connecteur et au moins une surface interne de l'adaptateur peuvent également former un dispositif de guidage de la rotation entre l'adaptateur et le connecteur.

Le dispositif de guidage comprend deux faces externes du connecteur et deux surfaces internes de l'adaptateur.

Selon un mode de réalisation, la face externe et la surface interne sont parallèles l'une à l'autre et parallèle à un premier plan de symétrie du connecteur.

L'invention couvre encore un balai d'essuyage comprenant un connecteur tel que décrit dans le présent document.

L'invention porte aussi sur un système d'essuyage comprenant un tel balai d'essuyage, un bras d'entraînement en rotation de ce balai d'essuyage et un adaptateur tel que décrit plus haut interposé entre le bras d'entraînement et le connecteur solidaire du balai d'essuyage.

Ces dispositions sont telles que la liaison mécanique entre le connecteur et l'adaptateur est sécurisée en limitant le jeu transversal entre ces deux pièces, tout en permettant une rotation optimisée du connecteur autour de l'arbre du bras d'entraînement et en évitant un déboîtement du connecteur et de l'arbre entre eux. Avec une telle connexion, le balayage de la surface vitrée s'opère sans à-coups transversaux à chaque changement de sens de balayage du système d'essuyage.

D'autres caractéristiques, détails et avantages de l'invention ressortiront plus clairement à la lecture de la description donnée ci-après, à titre indicatif, en relation avec les figures suivantes :
- la figure 1 est une vue schématique en perspective d'un système d'essuyage selon l'invention,
- la figure 2 est une vue en perspective d'une coupe médiane et longitudinale d'un connecteur selon l'invention qui participe du système d'essuyage illustré sur la figure 1,
- les figures 3 et 4 sont des vues en perspective sous deux angles différents du connecteur illustré sur la figure 2,
- la figure 5 est une vue en perspective d'un adaptateur apte à recevoir par emboîtement le connecteur illustré sur les figures 2 à 4,
- la figure 6 est une vue en perspective de l'adaptateur illustré sur la figure 4 monté sur le connecteur représenté sur les figures 2 à 4, formant ainsi un ensemble.

Il faut tout d'abord noter que les figures exposent l'invention de manière détaillée pour sa mise en oeuvre, et que ces figures peuvent également servir à mieux définir l'invention le cas échéant.

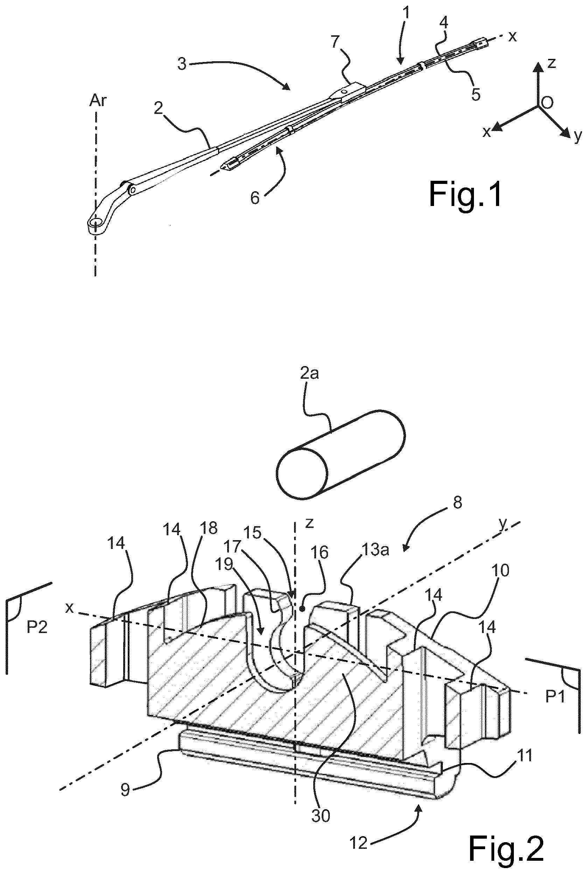

Sur les figures, les dénominations longitudinale, latérale, transversale, verticale, dessus, dessous, se réfèrent à l'orientation d'un balai d'essuyage 1 illustré sur la figure 1. Une direction longitudinale correspond à l'axe principal, également dénommé axe longitudinal X, du balai d'essuyage 1 selon lequel ce dernier s'étend. Une direction transversale correspond à celle d'un axe transversal Y qui est perpendiculaire à l'axe longitudinal X du balai d'essuyage 1 et perpendiculaire à un axe de rotation Aᵣ d'un bras d'entraînement 2 constitutif d'un système d'essuyage 3. Une direction verticale, parallèle à celle d'un axe vertical Z, et les dénominations supérieure ou inférieure se rapportent à des orientations parallèles à l'axe de rotation Aᵣ du bras d'entraînement 2 du système d'essuyage 3, la dénomination inférieure contenant le plan du pare-brise.

Les directions évoquées ci-dessus sont illustrées dans un repère orthonormé Oxyz représenté sur la figure 1. Dans ce repère, l'axe Ox représente la direction longitudinale, l'axe Oy représente la direction transversale et l'axe Oz représente la direction verticale.

Sur la figure 1, un véhicule automobile est couramment équipé du système d'essuyage 3 pour évacuer une eau et/ou des salissures présentes sur une surface vitrée, notamment une lunette arrière du véhicule automobile. Le système d'essuyage 3 comprend un bras d'entraînement 2 qui est apte à effectuer un mouvement de va-et-vient angulaire le long et au-dessus de la surface vitrée. La surface vitrée est indifféremment un pare-brise avant ou une lunette arrière équipant le véhicule automobile.

Le système d'essuyage 3 comprend aussi un balai d'essuyage 1 qui s'étend selon un axe principal, dit axe longitudinal X. Le balai d'essuyage 1 comprend au moins un déflecteur d'air 4 et une lame racleuse 5. Le déflecteur d'air 4 est prévu pour transformer une pression appliquée par un flux d'air circulant le long de la surface vitrée en une force d'appui du balai d'essuyage 1 contre la surface vitrée du véhicule automobile. La lame racleuse 5 est la pièce du balai d'essuyage 1 en contact direct avec la surface vitrée pour évacuer l'eau et/ou les salissures présentes sur ce dernier. Le déflecteur d'air 4 et la lame racleuse 5 forment un ensemble semi-rigide 6 qui est porté par un dispositif de connexion 7, interposé entre le bras d'entraînement 2 et l'ensemble semi-rigide 6.

Le dispositif de connexion 7 assure une liaison mécanique entre le bras d'entraînement 2 et le balai d'essuyage 1 et permet ainsi de séparer le balai d'essuyage 1 du bras d'entraînement 2, en vue d'un remplacement du balai d'essuyage 1.

En se reportant également sur la figure 2, le dispositif de connexion comprend un connecteur 8 représenté selon une coupe longitudinale médiane, le long de l'axe longitudinal X. Le connecteur 8 comprend une embase 9, qui s'étend selon les directions longitudinale et transversale, et un corps 10 qui s'étend, au-dessus de l'embase 9, sensiblement selon la direction verticale. Selon le mode de réalisation représenté sur les figures, le connecteur 8, pris dans son ensemble, présente un premier plan de symétrie P₁, longitudinal et vertical, parallèle au plan Oxz du repère orthonormé défini plus haut, et sensiblement médian selon la direction transversale. Selon un mode de réalisation de l'invention, le connecteur 8 est réalisé par moulage d'un matériau polymère, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. D'autres matériaux connus de l'homme du métier comme le PBT 30GF peuvent également être utilisés.

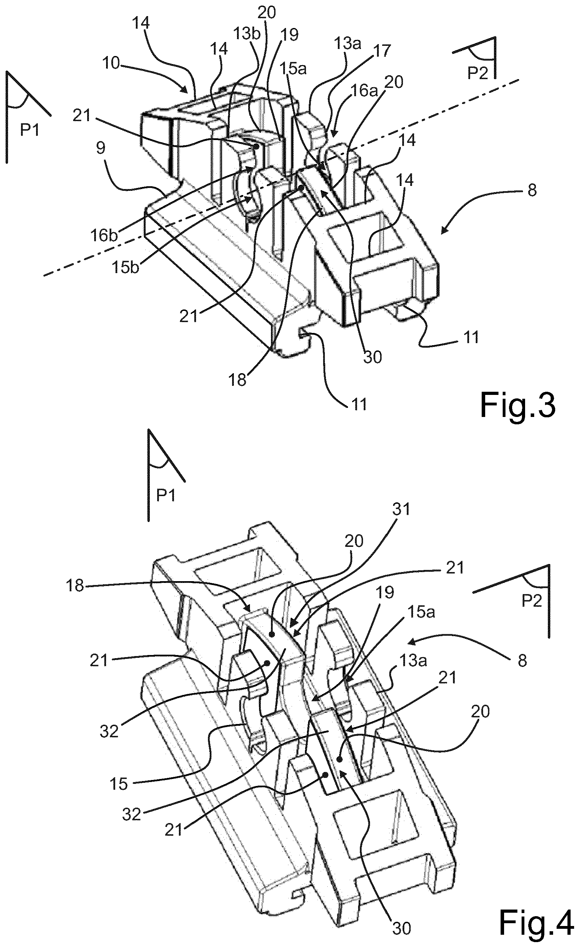

L'embase 9 comporte des moyens de fixation du connecteur 8 au balai d'essuyage 1. Ces moyens de fixation prennent la forme d'une première et d'une deuxième gorge 11 ménagées dans des parties inférieures de l'embase 9, dont chacune délimite un crochet 12 apte à venir en prise sur le balai d'essuyage 1. Seule une gorge 11 est représentée sur la figure 2, la deuxième gorge étant ménagée sur la partie symétrique de l'embase 9 par rapport au premier plan de symétrie P₁, longitudinal vertical, du connecteur 8, tel qu'illustré sur la figure 3.

Le corps 10, avantageusement issu de matière avec l'embase 9, s'étend au-dessus de cette dernière selon la direction verticale. Le corps 10 présente une dimension selon la direction transversale sensiblement inférieure à la dimension transversale de l'embase 9, et une dimension longitudinale sensiblement égale ou supérieure à la dimension longitudinale de l'embase 9. Selon le mode de réalisation de l'invention illustré sur les figures, la dimension longitudinale du corps 10 est supérieure à celle de l'embase 9, et le connecteur 8 présente un second plan de symétrie P₂, transversal et vertical, parallèle au plan Oyz du repère orthonormé défini plus haut et sensiblement médian selon l'axe longitudinal X.

Symétriquement disposés par rapport au premier plan de symétrie P₁ du connecteur 8, le corps 10 comporte des premier et deuxième flancs latéraux, sensiblement verticaux, et respectivement référencés 13a et 13b. Chacun de ces flancs latéraux 13a, 13b est sensiblement plan, de faible épaisseur selon la direction transversale, et la distance entre les faces externes de ces deux flancs latéraux 13a, 13b représente la dimension, selon la direction transversale, du corps 10 du connecteur 8. Le premier flanc latéral 13a et le deuxième flanc latéral 13b délimitent ainsi, entre eux, un volume intérieur du connecteur 8. Vers les extrémités longitudinales du corps 10, les premier et deuxième flancs latéraux 13a, 13b sont reliés entre eux par un ensemble de nervures 14 qui s'étendent selon la direction Oy, et jouent notamment un rôle de renfort du corps 10. Les nervures 14 sont ménagées symétriquement par rapport à un plan médian transversal du connecteur 8, ce plan médian étant parallèle au second plan de symétrie P₂.

Comme le montre les figures 2 et 3, chacun des premier et deuxième flancs latéraux 13a, 13b présente sensiblement, vu de côté, un profil tel que la surface supérieure de chacun de ces flancs latéraux 13a, 13b, en sa partie centrale selon la direction longitudinale du connecteur 8, forme une pente descendante en direction de chacune des extrémités longitudinales. Cette forme permet à la fois d'alléger le connecteur 8, et de faciliter son assemblage avec d'autres éléments du système d'essuyage 3, comme par exemple le bras d'entraînement.

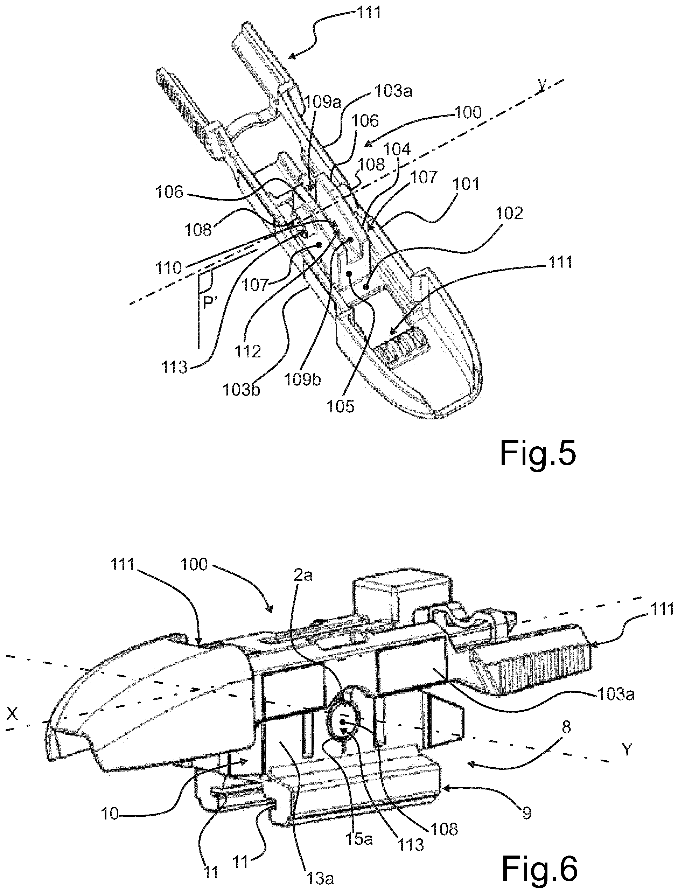

A travers chacun du premier et du deuxième flanc latéral 13a, 13b est ménagé un palier de rotation 15 d'un exemple d'arbre 2a que peut comprendre un adaptateur 100 représenté sur la figure 5. On note à ce stade de la description que l'arbre 2a illustré sur la figure 2 est représenté de manière schématique et non structurelle, cette représentation visant à décrire notamment le palier de rotation 15. Un premier palier de rotation 15 est ainsi ménagé dans le premier flanc latéral 13a, et un deuxième palier de rotation 15 est ainsi ménagé dans le deuxième flanc latéral 13b.

Selon un exemple de réalisation, un palier de rotation 15 est formé par un évidement circulaire ménagé dans le flan latéral 13a, 13b délimitant le connecteur 8. Chacun des paliers de rotation 15 a une forme sensiblement cylindrique, notamment circulaire et est traversant, c'est-à-dire qu'il s'étend transversalement sur toute l'épaisseur de chacun des flancs latéraux 13a, 13b. Le diamètre intérieur de chacun des paliers de rotation 15 est défini par rapport à un diamètre moyen de l'arbre 2a auquel le connecteur 8 est destiné à être connecté. Un arbre peut faire partie de l'adaptateur de la figure 5 mais le connecteur 8 est adapté pour recevoir un arbre solidaire d'un bras d'entraînement.

On notera qu'alternativement à la forme en évidement du ou des paliers de rotation 15, Celui-ci peut être formé par un toron qui émerge d'un flan latéral 13a, 13b du connecteur 8 en direction du dispositif de blocage, décrit ci-dessous. Dans un tel cas, les moyens de rotation de l'adaptateur 100 qui seront décrit plus bas sont adaptés pour recevoir ces torons. En d'autres termes, les moyens de rotation du connecteur 8 et de l'adaptateur 100 sont de forme complémentaire.

Les centres des deux paliers de rotation 15 respectivement agencés dans le premier flanc latéral 13a et dans le deuxième flanc latéral 13a sont alignés selon l'axe transversal Y parallèle à la direction de l'axe Oy du repère orthonormé défini plus haut. L'axe transversal Y matérialise l'axe de rotation de l'arbre 2a, une fois que ce dernier est accueilli à l'intérieur des paliers de rotation 15 du connecteur 8. L'adaptateur tourne donc autour de cet axe transversal Y par rapport au connecteur 8.

Chacun des paliers de rotation 15 est placé sensiblement, selon la direction longitudinale, dans la zone centrale du flanc latéral 13a, 13b correspondant. Selon le mode de réalisation illustré sur les figures, l'axe transversal Y selon lequel les centres de ces paliers de rotation 15 sont alignés est donc compris à l'intérieur du deuxième plan de symétrie P₂, transversal vertical, du connecteur 8. Selon la direction verticale, chacun des paliers de rotation 15 s'étend avantageusement sensiblement en zone centrale du corps 10 du connecteur 8. Chacun de ces paliers de rotation 15 est donc agencé, sur l'un ou l'autre des premier ou deuxième flancs latéraux 13a, 13b, de telle manière que, d'une part, il subsiste de la matière du flanc latéral 13a, 13b correspondant au-dessus du palier de rotation 15, et de telle manière que, d'autre part, il subsiste de la matière du flanc latéral 13a, 13b correspondant au-dessous dudit palier de rotation 15, entre son point le plus bas et la face supérieure de l'embase 9 du connecteur 8.

Pour permettre l'accueil et le maintien de l'arbre 2a solidaire de l'adaptateur 100 dans le connecteur 8, c'est-à-dire, par exemple simultanément dans les paliers de rotation 15, respectivement agencés dans le premier et dans le deuxième flancs latéraux 13a, 13b, une ouverture d'entrée 16 est ménagée au droit de chacun de ces paliers de rotation 15, au-dessus de ces derniers. La dimension longitudinale de chacune des ouvertures d'entrée 16 est inférieure au diamètre intérieur du palier de rotation 15 auquel l'ouverture d'entrée 16 donne accès, et dans lequel l'ouverture d'entrée 16 débouche. En d'autres termes, chaque ouverture d'entrée 16 forme un cône d'accès au palier de rotation 15 correspondant. Une première ouverture d'entrée 16a forme ainsi un cône d'accès au premier palier de rotation 15a agencé dans le premier flanc latéral 13a, et une deuxième ouverture d'entrée 16b forme un cône d'accès au deuxième palier de rotation 15b agencé dans le deuxième flanc latéral 13b. Ainsi, lorsque l'arbre 2a est accueilli simultanément dans les paliers de rotation 15, l'arbre 2a y est ensuite maintenu selon la direction verticale Oz. Afin de faciliter l'insertion de l'arbre 2a dans les ouvertures d'entrée 16, et la mise en place de cet arbre 2a dans les paliers de rotation 15, des chanfreins 17 sont formés sur chacune des arêtes d'entrée bordant chacune des ouvertures d'entrée 16a, 16b. La plus petite dimension longitudinale de l'ouverture d'entrée 16 est strictement inférieure au diamètre de l'arbre 2a.

Selon l'invention et comme visible sur les figures 3 ou 4, le connecteur 8 comprend au moins un dispositif de blocage 30 d'un mouvement selon l'axe de rotation Y. Ce dispositif de blocage 30 est agencé pour bloquer ou empêcher tout déplacement relatif entre le connecteur 8 et l'adaptateur 100 le long de la direction transversal Oy, correspondant à l'axe de rotation Y entre le balai d'essuyage 1 et son bras d'entraînement 2.

Le dispositif de blocage 30 est disposé à un endroit particulier du connecteur 8. En effet, il est disposé entre les deux paliers de rotation 15. En d'autres termes, le dispositif de blocage 30 s'étend entre les flans latéraux 13a, 13b délimitant le corps du connecteur 8. Le dispositif de blocage 30 s'étend longitudinalement et verticalement dans un volume intérieur 31 du connecteur 8, ce dernier étant délimité au fond par l'embase 9, dur les côtés par les flans latéraux 13a, 13b, en chaque bout par une nervure 14. Ce volume intérieur 31 est ouvert sur le dessus.

Selon un exemple de réalisation du dispositif de blocage 30, celui-ci prend la forme d'au moins une face 21 qui s'étend entre les deux paliers de rotation 15. Dans le cas où le dispositif de blocage comprend une unique face 21, le blocage du mouvement est opéré dans un unique sens le long de l'axe de rotation Y.

Avantageusement, le dispositif de blocage comprend deux faces 21 qui délimitent une joue de guidage 18 ménagée entre le premier flan latéral 13a porteur d'un des paliers et le deuxième flan latéral 13b porteur du second palier. Cette joue de guidage 18 est donc une bande rectiligne selon l'axe longitudinal, dont les deux faces 21 opposées forment un exemple de réalisation du dispositif de blocage 30.

Le corps 10 du connecteur 8 comporte ainsi, au sein du volume intérieur 31 délimité par les premier et deuxième flancs latéraux 13a, 13b, la joue de guidage 18 qui s'étend sensiblement longitudinalement et verticalement, à partir d'une face supérieure de l'embase 9.

Selon le mode de réalisation illustré par les figures, la joue de guidage 18 est placée, selon la direction transversale, sensiblement en partie médiane du volume intérieur 31. Elle s'étend donc ici sensiblement selon le premier plan de symétrie P₁, longitudinal vertical, du connecteur 8. La joue de guidage 18 est également avantageusement placée en position sensiblement centrale selon la direction longitudinale du connecteur 8. Avantageusement, le profil d'une surface supérieure 32 de la joue de guidage 18 est arqué ou courbé avec un centre virtuel placé sensiblement au niveau de la lame d'essuyage du balai d'essuyage, quand le connecteur 8 est solidaire de ce balai. Selon un mode de réalisation exemplatif de l'invention, la dimension de la joue de guidage 18 selon la direction verticale est inférieure à celle de chacun des flancs latéraux 13a, 13b, mesuré en leur partie centrale selon la direction longitudinale Ox.

Sensiblement en partie centrale selon la direction longitudinale, une encoche de guidage 19 est ménagée en partie supérieure de la joue de guidage 18. Cette encoche de guidage 19 débouche à la surface supérieure de la joue de guidage 18. Plus précisément, l'encoche de guidage 19 est agencée de telle manière qu'elle forme, en sa partie inférieure, sensiblement un demi-cylindre centré sur l'axe transversal Y passant par les centres des premier et deuxième paliers de rotation 15. Le diamètre de ce demi-cylindre est supérieur à celui des paliers de rotation 15. Selon le mode de réalisation illustré sur les figures, ce demi-cylindre se prolonge verticalement, vers la surface supérieure 32 de la joue de guidage 18, sur une dimension longitudinale sensiblement égale à son diamètre. Selon d'autres modes de réalisation alternatifs, l'encoche de guidage 19 peut présenter, en direction de la surface supérieure 32 de la joue de guidage 18, un léger évasement.

De part et d'autre de l'encoche de guidage 19, la joue de guidage 18 comprend des montants de guidage 20 qui délimitent notamment l'encoche de guidage 19 et sont répartis longitudinalement de part et d'autre de l'encoche de guidage 19. Autrement dit, les montants de guidage 20 sont les éléments de matière de la joue de guidage 18 qui délimite l'encoche de guidage. Chaque montant de guidage 20 comprend une face 21 qui est parallèle au premier plan de symétrie P₁. La face 21 est une surface de la joue de guidage 18 qui peut être polie, notamment à l'issue d'un traitement pour rendre la face 21 la plus lisse possible. Cette disposition vise à garantir une absence de jeu transversal entre le connecteur et l'adaptateur, sans pour autant constituer un frein à la rotation entre ces deux composants.

Sur la figure 5, l'adaptateur 100 est apte à être monté sur une pièce terminale du bras d'entraînement 2 ou bien directement sur le bras d'entraînement 2. C'est ainsi que cette adaptateur 100 comprend un moyen de solidarisation 111 destiné à attacher, sous la forme d'une liaison complète, de manière amovible l'adaptateur sur le bras d'entraînement 2. L'adaptateur 100 peut comprendre plusieurs moyens de solidarisation distincts et adaptés à différentes formes de bras. Dans un tel cas, l'adaptateur 100 est multi-connexions, en ce sens qu'un même adaptateur est utilisé pour relier le balai d'essuyage à plusieurs types de bras d'entraînement.

L'adaptateur 100 illustré sur les figures 5 et 6 comprend au moins un moyen de blocage 112 d'un mouvement le long de l'axe de rotation Y. Ce moyen de blocage 112 est agencé pour bloquer ou empêcher tout déplacement relatif entre l'adaptateur 100 et le connecteur 8 le long de la direction transversal Oy, correspondant à l'axe de rotation Y entre le balai d'essuyage 1 et son bras d'entraînement 2.

L'adaptateur 100 comprend aussi deux dispositifs de rotation 113 dont la fonction est de relier l'adaptateur 100 sur le connecteur 8, tout en autorisant un pivotement entre ces deux composants. Le moyen de blocage 112 est disposé entre les deux dispositifs de rotation 113, selon l'axe transversal Oy.

Selon un exemple de réalisation, le moyen de blocage 112 est formé par au moins une surface 109 qui s'étend entre les deux dispositifs de rotation 113. Dans le cas où le moyen de blocage 113 comprend une unique surface, le blocage du mouvement est opéré dans un unique sens le long de l'axe de rotation Y.

Le moyen de blocage 112 peut également être formé par deux surfaces internes 109a, 109b délimitant transversalement entre elles un espace interne 110. Ces deux surfaces internes 109a et 109b sont parallèles et sont disposées en vis-à-vis l'une face à l'autre. Dans un tel cas, le blocage transversal par rapport au connecteur 8 s'effectue dans les deux sens le long de l'axe transversal Y. Un tel blocage se fait par coopération du dispositif de blocage du connecteur 8 avec le moyen de blocage 112 de l'adaptateur 100.

L'adaptateur 100 comprend une enveloppe 101 qui délimite un volume interne de l'adaptateur. Selon une coupe transversale ménagée selon un plan transverse P', l'enveloppe 101 est agencée en un « U » dont un fond 102 forme la base du « U » et des parois latérales 103a, 103b forment les branches du « U ».

Le fond 102 est équipé d'un étrier 104. L'étrier 104 est également agencé en un « U » selon une coupe ménagée selon le plan transverse P'. Plus particulièrement l'étrier 104 comprend un élément de base 105 qui forme la base du « U » et deux parois longitudinales internes 106 qui forment les bras du « U ». L'élément de base 105 est relié au fond 102. L'élément de base 105 est issu de matière avec le fond 102 constitutif de l'adaptateur 100.

Selon un mode de réalisation, l'étrier 104 porte le dispositif de blocage 112 objet de l'invention. Dans un tel cas, la ou les surfaces internes qui bloquent le déplacement transversal de l'adaptateur 100 par rapport au connecteur 8 délimitent les parois longitudinales internes 106.

Chaque paroi longitudinale interne 106 comprend une surface externe 107 qui est ménagée en vis-à-vis d'une des parois latérales 103a, 103b. Chaque surface externe 107 est équipée d'un toron 108 de conformation circulaire qui émerge de la surface externe 107, vers l'extérieur de l'adaptateur 100. Les torons 108 forment conjointement un exemple de réalisation de l'arbre 2a décrit ci-dessus, chaque toron 108 étant prévu et de conformation adaptée pour venir s'emboîter à l'intérieur d'un palier de rotation 15 du connecteur 8, tel qu'illustré sur la figure 6. Ces torons 108 sont également un exemple de mise en oeuvre d'un dispositif de rotation 113 qui équipe l'adaptateur 100.

Alternativement, au moins un des dispositifs de rotation 113 est formé par un trou ménagé dans une paroi longitudinale interne 106 de l'adaptateur 100. Dans un tel cas, le connecteur 8 comprend au moins un toron qui vient se loger dans le trou décrit ci-dessus.

Chaque paroi longitudinale interne 106 est délimitée par la surface interne 109 qui est tournée vers l'espace interne 110 disposée entre les parois longitudinales internes 106 de l'étrier 104. L'espace interne 110 est prévu pour recevoir la joue de guidage 18 du connecteur 8 lorsque ce dernier est associé à l'adaptateur 100, tel qu'illustré sur la figure 6. La surface interne 109 est une surface de l'étrier 104 qui peut par exemple être polie, notamment à l'issue d'un traitement pour rendre la surface interne 109 la plus lisse possible. Cette disposition vise à garantir une absence de jeu transversal entre le connecteur 8 et l'adaptateur 100, sans pour autant constituer un frein à la rotation entre ces deux composants.

Les surfaces internes 109 de l'étrier 104 sont prévues pour venir en contact avec une face 21 respective de la joue de guidage 18, à partir d'une insertion de la joue de guidage 18 à l'intérieur du volume interne 110 de l'adaptateur 100. Dans cette configuration, les surfaces internes 109 et les faces 21 sont en contact étroit deux à deux.

Les surfaces internes 109 et les faces 21 forment conjointement aussi un dispositif de guidage 21, 109 du connecteur 8 en rotation sur l'arbre 2a lors d'un mouvement en rotation du connecteur 8 autour de l'arbre 2a de l'adaptateur 100.

La figure 6 montre un ensemble formé par les deux composants décrits en détails ci-dessus : l'adaptateur 100 et le connecteur 8. Un fois assemblé, le dispositif de blocage 30 du connecteur 8 est logé dans le moyen de blocage 112 de l'adaptateur 100. Plus spécifiquement, la joue de guidage 18 s'étend dans le volume interne 110. L'étrier 104 est également reçu entre les flans latéraux 13a et 13b du connecteur 8, avec ou sans contact avec les faces internes de ces parois latérales.

Un balai d'essuyage selon l'invention pourra comporter seulement le connecteur 8, ou l'ensemble, assemblé ou non, de l'adaptateur 100 et dudit connecteur 8. Un tel balai d'essuyage est vendu dans les réseaux après-vente ou seconde monte et l'adaptateur 100 peut être un adaptateur multi-connexions.

Enfin, Le balai d'essuyage équipé d'un tel ensemble et rendu solidaire d'un bras d'entraînement, forme alors un système d'essuyage qui peut avantageusement être vendu dans les réseaux première monte des constructeurs automobiles.

## Revendications

1. Ensemble (8, 100) formé par un adaptateur (100) et par un connecteur (8), l'adaptateur (100) et le connecteur (8) étant destinés à relier un balai d'essuyage (1) à un bras d'entraînement (2) d'un système d'essuyage (3), l'adaptateur (100) comprenant au moins un moyen de solidarisation (111) au bras d'entraînement (2) et deux dispositifs de rotation (113) autorisant une rotation entre le balai d'essuyage (1) et le bras d'entraînement (2), l'adaptateur (100) comprenant au moins un moyen de blocage (112) d'un mouvement le long d'un axe de rotation (Y) entre le balai d'essuyage (1) et son bras d'entraînement (2), ledit moyen de blocage (112) étant ménagé entre les deux dispositifs de rotation (113) selon l'axe de rotation (Y), le connecteur (8) comprenant au moins un moyen de fixation (11, 12) au balai d'essuyage (1) et deux paliers de rotation (15a, 15b) autorisant une rotation entre le balai d'essuyage (1) et le bras d'entraînement (2), le connecteur (8) comprenant au moins un dispositif de blocage (30) d'un mouvement le long d'un axe de rotation (Y) entre le balai d'essuyage (1) et son bras d'entraînement (2), ledit dispositif de blocage (30) étant ménagé entre les deux paliers de rotation (15a, 15b), selon l'axe de rotation (Y), l'ensemble (8, 100) étant **caractérisé en ce qu'**au moins un des dispositifs de rotation (113) est formé par un toron (108) qui émerge d'une paroi longitudinale interne (106) de l'adaptateur (100), vers l'extérieur de celui-ci.

2. Ensemble (8, 100) selon la revendication 1, dans lequel le moyen de blocage (112) est formé par au moins une surface interne (109) qui s'étend entre les deux dispositifs de rotation (113).

3. Ensemble (8, 100) selon la revendication 2, dans lequel le moyen de blocage (112) est formé par deux surfaces internes (109a, 109b) délimitant transversalement un espace interne (110) et disposées en vis-à-vis l'une face à l'autre.

4. Ensemble (8, 100) selon l'une quelconque des revendications précédentes, dans lequel au moins un des dispositifs de rotation (113) est formé par un trou ménagé dans une paroi longitudinale interne (106) de l'adaptateur (100).

5. Ensemble (8, 100) selon l'une quelconque des revendications précédentes, en dépendance de la revendication 3, qui présente une section en forme de « U », la ou les surfaces internes (109a, 109b) s'étendant dans la section en « U ».

6. Ensemble (8, 100) selon l'une quelconque des revendications précédentes, dans lequel le dispositif de blocage (30) est formé par au moins une face (21) qui s'étend entre les deux paliers de rotation (15a, 15b).

7. Ensemble (8, 100) selon la revendication 6, dans lequel le dispositif de blocage est formé par deux faces (21) qui délimitent une joue de guidage (18) ménagée entre un premier flan latéral (13a) porteur d'un des paliers (15a) et un deuxième flan latéral (13b) porteur du second palier (15b).

8. Ensemble (8, 100) selon l'une quelconque des revendications précédentes, dans lequel au moins un palier de rotation (15a, 15b) est formé par un évidement circulaire ménagé dans un flan latéral (13a, 13b) délimitant le connecteur (8).

9. Ensemble (8, 100) selon l'une quelconque des revendications précédentes, dans lequel au moins un palier de rotation (15a, 15b) est formé par un toron qui émerge d'un flan latéral (13a, 13b) du connecteur (8) en direction du dispositif de blocage (30).

10. Ensemble (8, 100) selon l'une quelconque des revendications précédentes, dans lequel le dispositif de blocage (30) du connecteur (8) est logé dans le moyen de blocage (112) de l'adaptateur (100).

11. Ensemble (8, 100) selon la revendication 10, en dépendance de la revendication 7, dans lequel la joue de guidage (18) s'étend entre les deux surfaces internes (109a, 109b) délimitant transversalement un espace interne (110) de l'adaptateur.

12. Balai d'essuyage (1) comprenant un ensemble (8, 100) selon l'une quelconque des revendications précédentes.

13. Système d'essuyage (3) comprenant un balai d'essuyage (1) selon la revendication 12 et un bras d'entraînement (2), l'adaptateur (100) étant interposé entre le bras d'entraînement (2) et le connecteur (8).

## Patentansprüche

1. Einheit (8, 100), die von einem Adapter (100) und einem Anschlussstück (8) gebildet ist, wobei der Adapter (100) und das Anschlussstück (8) dazu bestimmt sind, einen Scheibenwischer (1) mit einem Antriebsarm (2) eines Scheibenwischsystems (3) zu verbinden, wobei der Adapter (100) mindestens ein Verbindungsmittel (111) mit dem Antriebsarm (2) und zwei Rotationsvorrichtungen (113) umfasst, die eine Rotation zwischen dem Scheibenwischer (1) und dem Antriebsarm (2) gestatten, wobei der Adapter (100) mindestens ein Blockiermittel (112) einer Bewegung entlang einer Rotationsachse (Y) zwischen dem Scheibenwischer (1) und seinem Antriebsarm (2) umfasst, wobei das Blockiermittel (112) zwischen den zwei Rotationsvorrichtungen (113) entlang der Rotationsachse (Y) vorgesehen ist, wobei das Anschlussstück (8) mindestens ein Befestigungsmittel (11, 12) am Scheibenwischer (1) und zwei Rotationslager (15a, 15b) umfasst, die eine Rotation zwischen dem Scheibenwischer (1) und dem Antriebsarm (2) gestatten, wobei das Anschlussstück (8) mindestens eine Blockiervorrichtung (30) einer Bewegung entlang einer Rotationsachse (Y) zwischen dem Scheibenwischer (1) und seinem Antriebsarm (2) umfasst, wobei die Blockiervorrichtung (30) zwischen den zwei Rotationslagern (15a, 15b) entlang der Rotationsachse (Y) vorgesehen ist, wobei die Einheit (8, 100) **dadurch gekennzeichnet ist, dass** mindestens eine der Rotationsvorrichtungen (113) von einer Litze (108) gebildet ist, die aus einer Längsinnenwand (106) des Adapters (100) aus diesem herausragt.

2. Einheit (8, 100) nach Anspruch 1, bei der das Blockiermittel (112) von mindestens einer Innenfläche (109) gebildet ist, die sich zwischen den zwei Rotationsvorrichtungen (113) erstreckt.

3. Einheit (8, 100) nach Anspruch 2, bei der das Blockiermittel (112) von zwei Innenflächen (109a, 109b) gebildet ist, die quer einen Innenraum (110) begrenzen und einander gegenüberliegend angeordnet sind.

4. Einheit (8, 100) nach einem der vorhergehenden Ansprüche, bei der mindestens eine der Rotationsvorrichtungen (113) von einem Loch gebildet ist, das in einer Längsinnenwand (106) des Adapters (100) vorgesehen ist.

5. Einheit (8, 100) nach einem der vorhergehenden Ansprüche in Abhängigkeit von Anspruch 3, die einen U-förmigen Querschnitt aufweist, wobei sich die Innenfläche(n) (109a, 109b) in dem U-förmigen Querschnitt erstrecken.

6. Einheit (8, 100) nach einem der vorhergehenden Ansprüche, bei der die Blockiervorrichtung (30) von mindestens einer Fläche (21) gebildet ist, die sich zwischen den zwei Rotationslagern (15a, 15b) erstreckt.

7. Einheit (8, 100) nach Anspruch 6, bei der die Blockiervorrichtung von zwei Flächen (21) gebildet ist, die eine Führungswange (18) begrenzen, die zwischen einer ersten Seitenplatte (13a), die eines der Lager (15a) trägt, und einer zweiten Seitenplatte (13b), die das zweite Lager (15b) trägt, vorgesehen ist.

8. Einheit (8, 100) nach einem der vorhergehenden Ansprüche, bei der mindestens ein Rotationslager (15a, 15b) von einer kreisförmigen Ausnehmung gebildet ist, die in einer Seitenplatte (13a, 13b), die das Anschlussstück (8) begrenzt, vorgesehen ist.

9. Einheit (8, 100) nach einem der vorhergehenden Ansprüche, bei der mindestens ein Rotationslager (15a, 15b) von einer Litze gebildet ist, die aus einer Seitenplatte (13a, 13b) des Anschlussstücks (8) in Richtung der Blockiervorrichtung (30) herausragt.

10. Einheit (8, 100) nach einem der vorhergehenden Ansprüche, bei der die Blockiervorrichtung (30) des Anschlussstücks (8) in dem Blockiermittel (112) des Adapters (100) angeordnet ist.

11. Einheit (8, 100) nach Anspruch 10 in Abhängigkeit von Anspruch 7, bei der sich die Führungswange (18) zwischen den zwei Innenflächen (109a, 109b), die quer einen Innenraum (110) des Adapters begrenzen, erstreckt.

12. Scheibenwischer (1), umfassend eine Einheit (8, 100) nach einem der vorhergehenden Ansprüche.

13. Scheibenwischersystem (3), umfassend einen Scheibenwischer (1) nach Anspruch 12 und einen Antriebsarm (2), wobei der Adapter (100) zwischen dem Antriebsarm (2) und dem Anschlussstück (8) zwischengefügt ist.

## Claims

1. Assembly (8, 100) formed by an adapter (100) and by a connector (8), the adapter (100) and the connector (8) being intended to connect a wiper blade (1) to a driving arm (2) of a wiping system (3), the adapter (100) comprising at least one securing means (111) for securing to the driving arm (2) and two rotation devices (113) that allow rotation between the wiper blade (1) and the driving arm (2), the adapter (100) comprising at least one blocking means (112) for preventing a movement along a rotation axis (Y) between the wiper blade (1) and its driving arm (2), said blocking means (112) being formed between the two rotation devices (113), along the rotation axis (Y), the connector (8) comprising at least one fastening means (11, 12) for fastening to the wiper blade (1) and two rotation bearings (15a, 15b) that allow rotation between the wiper blade (1) and the driving arm (2), the connector (8) comprising at least one blocking device (30) for preventing a movement along a rotation axis (Y) between the wiper blade (1) and its driving arm (2), said blocking device (30) being formed between the two rotation bearings (15a, 15b), along the rotation axis (Y), the assembly (8, 100) being **characterized in that** at least one of the rotation devices (113) is formed by a trunnion (108) which protrudes from an internal longitudinal wall (106) of the adapter (100), towards the outside of the latter.

2. Assembly (8, 100) according to claim 1, wherein the blocking means (112) is formed by at least one internal surface (109) which extends between the two rotation devices (113).

3. Assembly (8, 100) according to claim 2, wherein the blocking means (112) is formed by two internal surfaces (109a, 109b) that transversely delimit an internal space (110) and are disposed facing one another.

4. Assembly (8, 100) according to any one of the preceding claims, wherein at least one of the rotation devices (113) is formed by a hole formed in an internal longitudinal wall (106) of the adapter (100).

5. Assembly (8, 100) according to any of the preceding claims, in combination with Claim 3, which has a "U"-shaped section, the internal surface(s) (109a, 109b) extending in the "U"-shaped section.

6. Assembly (8, 100) according to any of the preceding claims, wherein the blocking device (30) is formed by at least one face (21) which extends between the two rotation bearings (15a, 15b).

7. Assembly (8, 100) according to Claim 6, wherein the blocking device is formed by two faces (21) which delimit a guide plate (18) formed between a first lateral flank (13a) bearing one of the bearings (15a) and a second lateral flank (13b) bearing the second bearing (15b).

8. Assembly (8, 100) according to any of the preceding claims, wherein at least one rotation bearing (15a, 15b) is formed by a circular recess formed in a lateral flank (13a, 13b) delimiting the connector (8).

9. Assembly (8, 100) according to any of the preceding claims, wherein at least one rotation bearing (15a, 15b) is formed by a trunnion that protrudes from a lateral flank (13a, 13b) of the connector (8) in the direction of the blocking device (30).

10. Assembly (8,100) according to any of the preceding claims, wherein the blocking device (30) of the connector (8) is housed in the blocking means (112) of the adapter (100).

11. Assembly (8, 100) according to claim 10, in combination with claim 7, wherein the guide plate (18) extends between the two internal surfaces (109a, 109b) that transversely delimit an internal space (110) of the adapter.

12. Wiper blade (1) comprising an assembly (8, 100) according to any of the preceding claims.

13. Wiping system (3) comprising a wiper blade (1) according to claim 12, and a driving arm (2), the adapter (100) being interposed between the driving arm (2) and the connector (8).
